# EUROPÄISCHE PATENTSCHRIFT

(11) **EP 2 411 467 B1**
(45) Veröffentlichungstag und Bekanntmachung des Hinweises auf die Patenterteilung: **14.01.2015**
(21) Anmeldenummer: 10710212.1
(22) Anmeldetag: 16.03.2010
(51) Int. Cl.: C08L 55/02, C08L 69/00

(54) **SCHLAGZÄHMODIFIZIERTE POLYCARBONAT-ZUSAMMENSETZUNGEN ZUR HERSTELLUNG METALLISIERTER FORMKÖRPER MIT HOMOGENEM OBERFLÄCHENGLANZ**
IMPACT RESISTANT MODIFIED POLYCARBONATE COMPOSITIONS FOR PRODUCING METALIZED MOULDED ARTICLES WITH HOMOGENOUS SURFACE GLOSS
COMPOSITIONS DE POLYCARBONATE À RÉSISTANCE AUX IMPACTS MODIFIÉE POUR LA FABRICATION DE CORPS MOULÉS MÉTALLISÉS À BRILLANCE DE SURFACE HOMOGÈNE

(30) Priorität: 26.03.2009 DE 102009015039
(43) Veröffentlichungstag der Anmeldung: 01.02.2012
(73) Patentinhaber: Bayer Intellectual Property GmbH, 40789 Monheim (DE)
(72) Erfinder: SEIDEL, Andreas, 41542 Dormagen (DE); WENZ, Eckhard, 50931 Köln (DE); KLANKERS, Hans-Jürgen, 51375 Leverkusen (DE)
(74) Vertreter: BIP Patents
(86) Internationale Anmeldenummer: PCT/EP2010/001641
(87) Internationale Veröffentlichungsnummer: WO 2010/108617

(56) Entgegenhaltungen:
- GB-A- 1 397 219
- JP-A- 2002 124 109
- US-A1- 2006 217 496

## Beschreibung

Die Erfindung betrifft schlagzähmodifizierte Polycarbonat-Zusammensetzungen, die sich durch eine hohe Wärmeformbeständigkeit und durch eine gute Schmelzefließfähigkeit auszeichnen. Darüber hinaus lassen sich die aus den erfindungsgemäßen Zusammensetzungen im Spritzgussverfahren hergestellten Formkörper metallisieren, wobei die resultierenden metallisierten Formkörper einen besonders hohen und insbesondere homogenen Glanzgrad aufweisen. Weiterer Gegenstand der Erfindung sind somit auch die aus den erfindungsgemäßen Zusammensetzungen hergestellten metallisierten Formkörper.

Insbesondere betrifft die Erfindung durch Metallisierung verspiegelte und dadurch als Reflektor fungierende Gehäuse für Automobilscheinwerfer und Automobilrückleuchten, welche aus den erfindungsgemäßen Polycarbonatzusammensetzungen gefertigt sind, eine für die Anwendung ausreichende Wärmeformbeständigkeit und mechanische Belastbarkeit aufweisen und sich mit einer Leuchtenabdeckung bestehend aus einer transparenten Polycarbonat- oder Polymethylmethacrylat-Zusammensetzung verschweißen lassen.

Der Einsatz von Polycarbonat-Zusammensetzungen zur Herstellung von Automobilleuchten ist grundsätzlich bekannt.

JP-A 2005119239 offenbart ein Verfahren zur Laserverschweißung von Automobilleuchtenteilen aus thermoplastischen Harzen, wobei die erste Komponente transparent und die zweite Komponente opak ist. Beispielhaft werden Polycarbonat als transparente und ABS als opake Komponente offenbart.

DE-A 4404604 offenbart Reflektoren, insbesondere für Automobilscheinwerfer, bestehend aus einer starren Hülle aus einem duroplastischen Material, beschichtet mit einem metallisierten Film aus einem Thermoplasten, wobei der Thermoplast beispielsweise ein Polycarbonat oder ein ABS ist.

JP-A 3880142 offenbart Polycarbonat-Zusammensetzungen mit Perlmuttglanz und hohem Reflexionsvermögen, enthaltend 35 bis 65 Gew.-% aromatisches Polycarbonat mit einem viskositätsgemittelten Molekulargewicht von 16,000 - 26,000, und Methylmethacrylatpolymer und Acrylelastomer in einem Gewichtsverhältnis von 95:5 bis 60:40, sowie die Verwendung solcher Zusammensetzungen zur Herstellung von Lampenreflektoren.

JP-A 2002124109 offenbart Gehäusematerialien für Automobilleuchten, welche mit einer Reflektorschicht aus Aluminium bedampft werden, enthaltend 10 bis 90 Gew.-% Polycarbonat und 10 bis 90 Gew.-% kautschukmodifiziertes Styrolharz, wobei die Materialien einen Kautschukgehalt von 1 bis 7 Gew.-% aufweisen. Über Vorteile, die sich aus einer speziellen Größe der Kautschukpartikel im kautschukmodifizierten Styrolharz ergeben, schweigt diese Anmeldung. Bei dem in den offenbarten Beispielen eingesetzten kautschukmodifizierten Styrolharz handelt es sich um ein ABS bestehend aus 50 Gew.-Teilen Butadien, 15 Gew.-Teilen Acrylnitril und 35 Gew.-Teilen Styrol mit einer Teilchengröße der Kautschukgrundlage von 350 nm.

JP-A 10287802 offenbart Polycarbonat-Zusammensetzungen und ihre Verwendung als Gehäusematerial für Automobilleuchten mit guter Wärmeformbeständigkeit, Lösungsmittelbeständigkeit Bewitterungsbeständigkeit, Verschweißbarkeit und Metallisierbarkeit, enthaltend 30 bis 65 Gew.-Teile aromatisches Polycarbonat, 5 bis 40 Gew.-Teile Pfropfpolymere hergestellt durch Pfropfung von aromatischen Vinylmonomeren und Vinylcyaniden auf Acrylsäureester-enthaltende Kautschuke und 20 bis 50 Gew.-Teile Copolymere aus Vinylmonomeren und Vinylcyaniden.

Ebenso ist in der Literatur beschrieben, dass sich aus speziellen Teilchengrößenverteilungen der Kautschukpartikel in kautschukmodifizierten Polycarbonat-Zusammensetzungen technische Vorteile ergeben können.

EP-A 704 488 offenbart Polycarbonat-Zusammensetzungen mit verbesserter Kältezähigkeit enthaltend 15 bis 80 Gew.-Teile thermoplastisches Polycarbonat, 4 bis 40 Gew.-Teile auf Kautschukpartikel als Grundlage basierendes Pfropfpolymerisat und 16 bis 45 Gew.-Teile thermoplastisches Vinylaromat(co)polymerisat, wobei die Pfropfgrundlage eine mittlere Teilchengröße (d50) von 200 bis 350 nm aufweist und Pfropfpolymerisat und Vinylaromat(co)polymerisat im Gewichtsverhältnis zwischen 2:1 und 1:4 zum Einsatz kommen.

EP-A 606 558 offenbart Polycarbonat-Zusammensetzungen mit verbesserter Schmelzefließfähigkeit und erhöhtem Biege-E-Modul, enthaltend 55 bis 90 Gew.-% aromatisches Polycarbonat, 10 bis 30 Gew.-% eines Pfropfpolymers auf Basis einer partikulären Dienkautschukgrundlage und 0 bis 15 Gew.-% eines Vinylaromatcopolymers, wobei die Dienkautschukgrundlage eine enge, monodisperse Teilchengrößenverteilung besitzt, dadurch gekennzeichnet, dass mehr als 50 Gew.-% der Partikel einen Durchmesser zwischen 200 und 300 nm und mehr als 70 Gew.-% der Partikel einen Durchmesser zwischen 200 und 400 nm aufweisen.

Der Erfindung liegt die Aufgabe zu Grunde, Polycarbonat-Zusammensetzungen mit hoher Wärmeformbeständigkeit und guter Schmelzefließfähigkeit zur Herstellung von Formkörpern im Spritzgussverfahren, welche nach Metallisierung eine Oberfläche mit hohem und homogenen Glanzgrad aufweisen, bereitzustellen. Darüber hinaus war eine Aufgabe der Erfindung, metallisierte Formkörper, in bevorzugter Ausführungsform Formkörper mit einer auf der metallisierten Seite zumindest zum Teil konkav oder konvex gekrümmten Oberfläche bereitzustellen, die einen hohen und insbesondere homogenen Oberflächenglanz aufweisen sowie sich durch eine hohe Wärmeformbeständigkeit und Zähigkeit auszeichnen und sich mit Polycarbonat und/oder Polymethylmethacrylat verschweißen lassen.

Überraschenderweise wurde nun gefunden, dass Zusammensetzungen enthaltend
A) 55 bis 90 Gew.-Teile, bevorzugt 63 bis 80 Gew.-Teile, besonders bevorzugt 65 bis 75 Gew.-Teile (bezogen auf die Summe der Gew.-Teile der Komponenten A, B und C) aromatisches Polycarbonat und/oder aromatisches Polyestercarbonat mit jeweils einer relativen Lösungsviskosität, gemessen in Methylenchlorid, von 1,20 bis 1,30, bevorzugt von 1,22 bis 1,28, besonders bevorzugt von 1,23 bis 1,27,
B) 10 bis 45 Gew.-Teile, bevorzugt 15 bis 37 Gew.-Teile, besonders bevorzugt 20 bis 34,9 Gew.-Teile (bezogen auf die Summe der Gew.-Teile der Komponenten A, B und C) kautschukmodifizierte Komponente enthaltend
   B.1) mindestens ein Pfropfpolymerisat, hergestellt in Emulsionspolymerisation, durch Pfropfpolymerisation von
      B.1.1) 5 bis 95 Gew.-%, vorzugsweise 20 bis 80 Gew.-%, besonders bevorzugt 25 bis 60 Gew.-%, bezogen auf die Summe aus B.1.1 und B.1.2, wenigstens eines Vinylmonomeren auf
      B.1.2) 95 bis 5 Gew.-%, vorzugsweise 80 bis 20 Gew.-%, besonders bevorzugt 75 bis 40 Gew.-%, bezogen auf die Summe aus B.1.1 und B.1.2, einer oder mehrerer teilchenförmiger Kautschuke als Pfropfgrundlagen mit Glasübergangstemperaturen < 0°C, vorzugsweise < -10°C, besonders bevorzugt < -20°C,
   B.2) ein kautschukfreies Vinyl(co)polymerisat,
   B.3) gegebenenfalls ein Pfropfpolymerisat von wenigstens einem Vinylmonomeren auf wenigstens eine Kautschukgrundlage mit einer Glasübergangstemperatur < 0°C, bevorzugt < -20°C, hergestellt im Masse-, Lösungs- oder Masse-Suspensions-Polymerisationsverfahren,
      wobei die Pfropfpolymerisate B.1 und B.3 herstellungsbedingt neben Pfropfpartikeln gegebenenfalls auch freies, das heißt chemisch nicht an die Kautschukpartikel gebundenes und/oder in organischen Lösungsmitteln unlöslicher Form in die Pfropfpartikel eingeschlossenes (Co)Polymerisat der Vinylmonomere enhalten können,
C) 0 bis 25 Gew.-Teile, bevorzugt 0 bis 10 Gew.-Teile, besonders bevorzugt von 0,1 bis 5 Gew.-Teile (bezogen auf die Summe der Gew.-Teile der Komponenten A, B und C) Polymeradditive,
dadurch gekennzeichnet, dass
(i) der Kautschukgehalt der Polycarbonat-Zusammensetzung 1 bis 6 Gew.-%, bevorzugt 2,0 bis 5,5 Gew.-%, besonders bevorzugt 2,5 bis 5,0 Gew.-% beträgt sowie
(ii) mindestens 40 Gew.-%, bevorzugt mindestens 50 Gew.-% der Pfropfpartikel in Komponente B einen Durchmesser (gemessen mit Ultrazentrifuge) von bis zu 200 nm aufweisen, und
(iii) bis zu 25 Gew.-%, insbesondere bis zu 20 Gew.-% der Pfropfpartikel in der Komponente B einen Durchmesser (gemessen mit Ultrazentrifuge) von über 400 nm aufweisen,
   wobei die Summe der Komponenten A + B + C auf 100 Gewichtsteile normiert ist, die erfindungsgemäße Aufgabe lösen.

Unter Pfropfpartikel werden in dieser Anmeldung dabei die in geeigneten Lösungsmitteln wie beispielsweise Aceton oder Toluol nicht löslichen Anteile der Komponenten B.1 und B.3 verstanden. Diese umfassen jeweils die Kautschukgrundlage mit chemisch an den Kautschuk durch Pfropfpolymerisation als Hülle angebundenem Vinyl(co)polymerisat und gegebenenfalls mit in die Kautschukgrundlage irreversibel eingeschlossenem Vinyl(co)polymerisat.

In einer bevorzugten Ausführungsform weisen die erfindungsgemäßen Polycarbonat-Zusammensetzungen eine Schmelzeviskosität gemessen gemäß ISO 11443 bei einer Temperatur von 260°C und der Scherrate von 1000s⁻¹ von nicht über 240 Pas, bevorzugt nicht über 230 Pas, besonders bevorzugt nicht über 200 Pas auf. Dies hat weitere vorteilhafte Effekte, weil die aus diesen erfindungsgemäßen Zusammensetzungen im Spritzguss gefertigten Formkörper einen hohen und insbesondere einen besonders homogenen Oberflächenglanz aufweisen.

### Komponente A

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 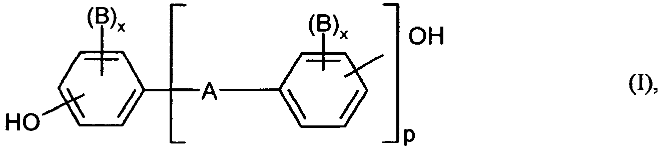 wobei
- A: eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 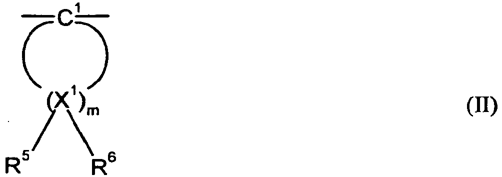 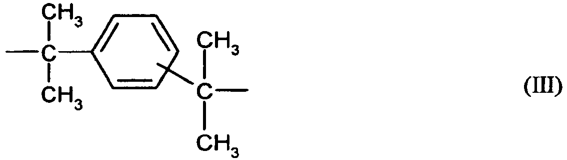
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,20 bis 1,30, bevorzugt von 1,22 bis 1,28, besonders bevorzugt von 1,23 bis 1,27 (gemessen an Lösungen von 0,5 g Polycarbonat oder Polyestercarbonat in 100 ml Methylenchlorid-Lösung bei 25°C).

### Komponente B

Bei der Komponente B handelt es sich um eine kautschukmodifiziertes Komponente.

### Komponente B.1

Komponente B enthält als Komponente B.1 ein Pfropfpolymerisat oder eine Mischung aus mehreren Pfropfpolymerisaten, hergestellt in Emulsionspolymerisation, mit partikulärem Kautschuk als Pfropfgrundlage.

Bevorzugt umfasst Komponente B.1 ein oder mehrere Pfropfpolymerisate von
- B.1.1: 5 bis 95 Gew.-%, vorzugsweise 20 bis 80 Gew.-%, besonders bevorzugt 25 bis 60 Gew.-% (bezogen auf die Summe der Gew.-% aus B.1.1 und B.1.2), wenigstens eines Vinylmonomeren auf
- B.1.2: 95 bis 5 Gew.-%, vorzugsweise 80 bis 20 Gew.-%, besonders bevorzugt 75 bis 40 Gew.-% (bezogen auf die Summe der Gew.-% aus B.1.1 und B.1.2) einer oder mehrerer Pfropfgrundlagen mit Glasübergangstemperaturen < 0°C, vorzugsweise < -10°C, besonders bevorzugt < -20°C.

Die Pfropfgrundlage B.1.2 hat vorzugsweise eine mittlere Teilchengröße (d₅₀-Wert) von 0,05 bis 0,25 µm, bevorzugt von 0,08 bis 0,20, besonders bevorzugt von 0,10 bis 0,18 µm.

Monomere B.1.1 sind vorzugsweise Gemische aus
- B.1.1.1: 50 bis 99 Gew.-%, bevorzugt 60 bis 80 Gew.-%, besonders bevorzugt 70 bis 80 Gew.-% (bezogen auf die Summe der Gew.-% aus B.1.1.1 und B.1.1.2) mindestens eines Monomeren ausgewählt aus der Gruppe bestehend aus Vinylaromaten und/oder kernsubstituierten Vinylaromaten (wie Styrol, α-Methylstyrol, p-Methylstyrol, p-Chlorstyrol) und Methacrylsäure-(C₁-C₈)-Alkylester (wie Methylmethacrylat, Ethylmethacrylat), und
- B.1.1.2: 1 bis 50 Gew.-%, bevorzugt 20 bis 40 Gew.-%, besonders bevorzugt 20 bis 30 Gew.-% (bezogen auf die Summe der Gew.-% aus B.1.1.1 und B.1.1.2) mindestens eines Monomeren ausgewählt aus der Gruppe bestehend aus Vinylcyanide (ungesättigte Nitrile wie Acrylnitril und Methacrylnitril), (Meth)Acrylsäure-(C₁-C₈)-Alkylester (wie Methylmethacrylat, n-Butylacrylat, t-Butylacrylat), ungesättigte Carbonsäuren und/oder Derivate (wie Anhydride und Imide) ungesättigter Carbonsäuren (beispielsweise Maleinsäureanhydrid und N-Phenyl-Maleinimid).

Bevorzugte Monomere B.1.1.1 sind ausgewählt aus mindestens einem der Monomere Styrol, α-Methylstyrol und Methylmethacrylat, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril.

Für die Pfropfpolymerisate B.1 geeignete Pfropfgrundlagen B.1.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1.1 und B.1.1.2), mit der Maßgabe, dass die Glasübergangstemperatur der Komponente B.1.2 unterhalb < 0°C, vorzugsweise < -10°C, besonders bevorzugt < -20°C liegt. Besonders bevorzugt ist reiner Polybutadienkautschuk.

Besonders bevorzugte Pfropfpolymerisate B.1 sind beispielsweise ABS- oder MBS-Polymerisate, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Besonders geeignete Pfropfpolymerisate B.1 weisen eine Kern-Schale-Struktur auf.

Der Gelanteil der Pfropfgrundlage B.1.2 beträgt vorzugsweise mindestens 60 Gew.-%, besonders bevorzugt mindestens 80 Gew.-%, insbesondere mindestens 90 Gew.-% (in Toluol gemessen).

Besonders geeignete Pfropfpolymerisate B.1 sind insbesondere auch solche Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Komponente B.1 solche Produkte verstanden, die durch (Co)Polymerisation der Pfropfmonomere in Gegenwart der Pfropfgrundlage(n) gewonnen werden und bei der Aufarbeitung mit anfallen. Diese Produkte können demnach neben dem eigentlichen Pfropfpolymerisat auch freies, d.h. nicht chemisch an den Kautschuk gebundenes (Co)Polymerisat der Pfropfmonomere enthalten.

Geeignete Acrylatkautschuke gemäß B.1.2 sind vorzugsweise Polymerisate aus Acrylsäurealkylestern, gegebenenfalls mit bis zu 40 Gew.-%, bezogen auf B.1.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, besonders bevorzugt 0,05 bis 2 Gew.-%, bezogen auf die Pfropfgrundlage B.1.2. Bei cyclischen vernetzenden Monomeren mit mindestens drei ethylenisch ungesättigten Gruppen ist es vorteilhaft, die Menge auf unter 1 Gew.-% der Pfropfgrundlage B.1.2 zu beschränken.

Bevorzugte "andere" polymerisierbare, ethylenisch ungesättigte Monomere, die neben den Acrylsäureestern gegebenenfalls zur Herstellung der Pfropfgrundlage B.1.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.1.2 sind Emulsionspolymerisate, die einen Gelgehalt von mindestens 60 Gew.-% aufweisen.

Weitere geeignete Pfropfgrundlagen gemäß B.1.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.1.2 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente B.2

Komponente B enthält als Komponente B.2 ein kautschukfreies Vinyl(co)polymerisat.

Bei den kautschukfreien Vinyl(co)polymerisaten gemäß Komponente B.2 handelt es sich um kautschukfreie Homo- und/oder Copolymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigten Carbonsäuren sowie Derivaten (wie Anhydride und Imide) ungesättigter Carbonsäuren.

Insbesondere geeignet sind Vinyl(co)polymerisate B.2 aus
- B.2.1: 50 bis 99 Gew.-%, bevorzugt 60 bis 80 Gew.-%, besonders bevorzugt 70 bis 80 Gew.-% (bezogen auf die Summe der Gew.-% aus B.2.1 und B.2.2) mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C₁-C₈)-Alkylester (wie beispielsweise Methylmethacrylat, n-Butylacrylat, tert.-Butylacrylat) und
- B.2.2: 1 bis 50 Gew.-%, bevorzugt 20 bis 40 Gew.-%, besonders bevorzugt 20 bis 30 Gew.-% (bezogen auf die Summe der Gew.-% aus B.2.1 und B.2.2) mindestens eines Monomeren ausgewählt aus der Gruppe der Vinylcyanide (wie beispielsweise ungesättigte Nitrile wie Acrylnitril und Methacrylnitril), (Meth)Acrylsäure-(C₁-C₈)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Die Vinyl(co)polymerisate B.2 sind vorzugsweise harzartig und thermoplastisch. Besonders bevorzugt ist das Copolymerisat aus B.2.1 Styrol und B.2.2 Acrylnitril.

Derartige Vinyl(co)polymerisate B.2 sind bekannt und lassen sich durch radikalische Polymerisation, insbesondere durch Emulsions-, Suspensions-, Lösungs- oder Massepolymerisation herstellen. Die Vinyl(co)polymerisate besitzen vorzugsweise gewichtsgemittelte Molekulargewichte M_{w} (ermittelt durch GPC mit Polystyrol als Standard) zwischen 40.000 und 250.000 g/mol, bevorzugt zwischen 60.000 und 170.000 g/mol, besonders bevorzugt zwischen 70.000 und 140.000 g/mol.

Komponenten B.1 und B.2 können auch als Präcompound aus der Gesamtmenge oder einer Teilmenge von B.1 mit der Gesamtmenge oder einer Teilmenge von B.2 zum Einsatz kommen.

Unter Präcompound im Sinne der Erfindung sind zu verstehen solche Mischungen aus Pfropfpolymeren B.1 und kautschukfreien Vinyl(co)polymeren B.2, welche in einem Compoundierungsaggregat, beispielsweise einem Knetreaktor oder Zweiwellenextruder durch Zuführung thermischer und/oder mechanischer Energie auf eine Temperatur von 180°C bis 300°C, bevorzugt 200°C bis 280°C, besonders bevorzugt 220°C bis 260°C aufgeheizt und dadurch aufgeschmolzen, gemischt und ineinander dispergiert, gegebenenfalls durch Anlegen eines Unterdrucks entgast und danach wieder abgekühlt und granuliert worden sind. In bevorzugter Ausführungsform kommt dabei das Pfropfpolymer B.1 in feuchtem Zustand (d.h. in Anwesenheit von Wasser) gemäß der Verfahren, welche in EP 0 768 157 A1 und EP 0 867 463 A1 beschrieben sind, zum Einsatz.

Die im Sinne der Erfindung für den Einsatz in Komponente B geeigneten Präcompounds enthalten bevorzugt 10 bis 70 Gew.-Teile, besonders bevorzugt 20 bis 60 Gew.-Teile, insbesondere 30 bis 55 Gew.-Teile (jeweils bezogen auf den Präcompound) Pfropfpolymer B.1 und bevorzugt 30 bis 90 Gew.-Teile, besonders bevorzugt 40 bis 80 Gew.-Teile, insbesondere 45 bis 70 Gew.-Teile (jeweils bezogen auf den Präcompound) an kautschukfreiem Vinyl(co)polymer B.2.

### Komponente B.3

Des weiteren kann die Komponente B gegebenenfalls auch Pfropfpolymerisate B.3 hergestellt im Masse-, Lösungs- oder Masse-Suspensions-Polymerisationsverfahren enthalten.

Bei der Komponente B.3 handelt es sich bevorzugt um Pfropfpolymerisate von
- B.3.1: 60 bis 95 Gew.-%, vorzugsweise 70 bis 92 Gew.-%, besonders bevorzugt 80 bis 90 Gew.-% (bezogen auf die Summe der Gew.-% aus B.3.1 und B.3.1) einer Mischung aus
- B.3.1.1: 65 bis 85 Gew.-%, bevorzugt 70 bis 80 Gew.-% (bezogen auf die Summe der Gew.-% aus B.3.1.1 und B.3.1.2) mindestens eines Monomeren ausgewählt aus der Gruppe der Vinylaromaten (wie beispielsweise Styrol, α-Methylstyrol), kemsubstituierten Vinylaromaten (wie beispielsweise p-Methylstyrol, p-Chlorstyrol) und Methacrylsäure-(C₁-C₈)-Alkylester (wie beispielsweise Methylmethacrylat, Ethylmethacrylat) und
- B.3.1.2: 15 bis 35 Gew.-%, bevorzugt 20 bis 30 Gew.-% (bezogen auf die Summe der Gew.-% aus B.3.1.1 und B.3.1.2) mindestens eines Monomeren ausgewählt aus der Gruppe der Vinylcyanide (wie beispielsweise ungesättigte Nitrile wie Acrylnitril und Methacrylnitril), (Meth)Acryisäure-(C₁-C₈)-Alkylester (wie beispielsweise Methylmethacrylat, n-Butylacrylat, tert.-Butylacrylat), ungesättigte Carbonsäuren und Derivate (wie beispielsweise Anhydride und Imide) ungesättigter Carbonsäuren (beispielsweise Maleinsäureanhydrid und N-Phenyl-Maleinimid)
auf
- B.3.2: 5 bis 40 Gew.-%, vorzugsweise 8 bis 30 Gew.-%, besonders bevorzugt 10 bis 20 Gew.-% (bezogen auf die Summe der Gew.-% aus B.3.1 und B.3.2) wenigstens einer Pfropfgrundlage mit einer Glasübergangstemperatur < 0°C, bevorzugt < -20°C.

Die in Masse-, Lösungs- oder Masse-Suspensions-Polymerisation hergestellten Pfropfpolymerisate gemäß Komponenten B.3 weisen vorzugsweise eine mittlere Teilchengröße (d₅₀-Wert) von 0,1 bis 10 µm, bevorzugt von 0,2 bis 5 µm, besonders bevorzugt von 0,3 bis 2,0 µm.

Bevorzugte Monomere B.3.1.1 sind ausgewählt aus mindestens einem der Monomere Styrol, α-Methylstyrol und Methylmethacrylat, bevorzugte Monomere B.3.1.2 sind ausgewählt aus mindestens einem der Monomere Acrylnitril, Maleinsäureanhydrid und Methylmethacrylat.

Besonders bevorzugte Monomere sind B.3.1.1 Styrol und B.3.1.2 Acrylnitril.

Für die Pfropfpolymerisate B.3 bevorzugte Pfropfgrundlagen B.3.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien und Mischungen aus mehreren der zuvor genannten Kautschuktypen.

Besonders bevorzugte Pfropfgrundlagen B.3.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß B.3.1.1 und B.3.1.2) und Mischungen aus den zuvor genannten Kautschuktypen.

Besonders bevorzugte Pfropfgrundlagen B.3.2 sind reiner Polybutadienkautschuk, StyrolButadien-Blockcopolymerkautschuk sowie Mischungen aus reinem Polybutadienkautschuk und Styrol-Butadien-Blockcopolymerkautschuk.

Pfropfpolymerisate B.3 werden im Allgemeinen hergestellt durch radikalisch initiierte Polymerisation.

Besonders bevorzugte Pfropfpolymerisate B.3 sind ABS-Polymerisate.

Das Pfropfpolymerisat B.3 umfasst freies, d.h. nicht chemisch an die Kautschukgrundlage gebundenes Copolymerisat aus B.3.1.1 und B.3.1.2, welches sich dadurch auszeichnet, dass es in geeigneten Lösungsmittel (z.B. Aceton) gelöst werden kann.

Bevorzugt enthält die Komponente B.3 ein freies Copolymerisat aus B.3.1.1 und B.3.1.2, welches ein gewichtsgemitteltes Molekulargewicht (Mw), bestimmt per Gelpermeationschromatographie mit Polystyrol als Standard, von 60,000 bis 200,000 g/mol, besonders bevorzugt von 70,000 bis 140,000 g/mol aufweist.

Die Mengenverhältnisse, in denen die Komponenten B.1 bis B.3 in dem kautschukmodifizierten Styrolharz gemäß Komponente B enthalten sein können, werden einerseits durch das Verhältnis der Komponenten A und B in der Gesamtzusammensetzung und andererseits durch die individuellen Kautschukgehalte der Komponenten B.1 und B.3 sowie der Größenverteilung ihrer Pfropfpartikel bestimmt.

Grundsätzlich müssen die Mengenverhältnisse der Komponenten A und B einerseits sowie der Komponenten B.1 bis B.3 andererseits in den erfindungsgemäßen Zusammensetzungen so aufeinander abgestimmt sein, dass
(i) der gesamte Kautschukgehalt (d.h. die Summe aus den Elastomeranteilen aus B.1 und B.3) der Polycarbonat-Zusammensetzung 1 bis 6 Gew.-%, bevorzugt 2,0 bis 5,5 Gew.-%, besonders bevorzugt 2,5 bis 5,0 Gew.-% beträgt sowie
(ii) mindestens 40 Gew.-%, bevorzugt mindestens 50 Gew.-% aller Pfropfpartikel in Komponente B (also unter Berücksichtung der Pfropfpartikel aus B.1 und B.3) einen Durchmesser, gemessen mit Ultrazentrifuge, von bis zu 200 nm, und
(iii) in bevorzugter Ausführungsform darüber hinaus bis zu 25 Gew.-%, insbesondere bis zu 20 Gew.-% aller Pfropfpartikel in der Komponente B einen Durchmesser, gemessen mit Ultrazentrifuge, von über 400 nm aufweisen.

In bevorzugter Ausführungsform besteht Komponente B, unter der Voraussetzung der Einhaltung der zuvorgenannten Bedingungen (i) bis (iii), dabei aus 5 bis 50 Gew.-%, besonders bevorzugt 8 bis 40 Gew.-%, insbesondere 15 bis 35 Gew.-%, bezogen auf die Komponente B, aus Komponente B.1, zu 50 bis 95 Gew.-%, besonders bevorzugt 60 bis 92 Gew.-%, insbesondere 65 bis 85 Gew.-%, bezogen auf die Komponente B, aus Komponente B.2 und zu 0 bis 25 Gew.-%, besonders bevorzugt 0 bis 10 Gew.-%, insbesondere zu 0 Gew.-%, bezogen auf Komponente B, aus Komponente B.3.

### Komponente C

Die Zusammensetzung kann als Komponente C Polymeradditive enthalten. Als handelsübliche Polymeradditive gemäß Komponente C kommen Additive wie beispielsweise Flammschutzmittel (beispielsweise Phosphor- oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, Füll- und Verstärkungsstoffe (beispielsweise Talk, ggf. gemahlene Glas- oder Karbonfasern, Glas- oder Keramik(hohl)kugeln, Glimmer, Kaolin, CaCO₃ und Glasschuppen) sowie Farbstoffe und Pigmente (beispielsweise Ruß, Titandioxid oder Eisenoxid) und Brönstet-saure Verbindungen als Basenfänger, oder aber Mischungen mehrerer der genannten Additive in Frage.

In bevorzugter Ausführungsform sind die erfindungsgemäßen Zusammensetzungen frei von Flammschutzmitteln sowie frei von Füll- und Verstärkungsstoffen.

### Herstellung der Formmassen und Formkörper

Die erfindungsgemäßen thermoplastischen Formmassen können beispielsweise hergestellt werden, indem man die jeweiligen Bestandteile in bekannter Weise vermischt und bei Temperaturen von bevorzugt 220°C bis 3330°C, besonders bevorzugt bei 260 bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der erfindungsgemäßen Zusammensetzungen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich.

Die erfindungsgemäßen Formmassen eignen sich beispielsweise auch zur Herstellung von folgenden Formkörpern : Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formkörper für Sanitär- und Badausrüstungen, Abdeckgitter für Lüfteröffnungen und Gehäuse für Gartengeräte.

Insbesondere eignen sich die erfindungsgemäßen Formmassen zur Herstellung von metallisierten Formkörper, in bevorzugter Ausführungsform auch Formkörpern mit einer auf der metallisierten Seite zumindest zum Teil konkav oder konvex gekrümmten Oberfläche, mit hohen Anforderungen an den Oberflächenglanz, insbesondere mit hohen Anforderungen an die Homogenität des Oberflächenglanzes, sowie mit hohen Anforderungen an die Wärmeformbeständigkeit und Zähigkeit. Solche Formkörper aus den erfindungsgemäßen Formmassen lassen sich mit Formkörpern aus Polycarbonat und/oder Polymethylmethacrylat verschweißen.

In besonders bevorzugter Ausführungsform eignen sich die erfindungsgemäßen Formmassen somit zur Herstellung von Leuchtengehäuse mit Reflektorfunktionalität, welche gegebenenfalls mit einer transparenten Leuchtenabdeckung aus Polycarbonat oder Polymethylmethacrylat verschweißt werden sollen. Beispielsweise und bevorzugt eignen sich die erfindungsgemäßen Formmassen demnach zur Herstellung von Autmobilscheinwerfern und Automobilrückleuchten.

Zur Metallisierung der spritzgegossenen Formteile kommen prinzipiell alle aus dem Stand der Technik bekannten Verfahren in Frage. Zu nennen sind hier beispielsweise ECD-(electro-coating deposition) bzw. Galvanisierungs-, PVD-(physical vapour deposition) und CVD-(chemical vapour deposition)Verfahren.

Bevorzugt eignen sich die spritzgegossenen Formteile zur Metallisierung in einem PVD-Verfahren wie beispielsweise dem Elektronenstrahlverdampfen oder dem Sputterverfahren.

### Beispiele

### Komnonente A-1

Lineares Polycarbonat auf Basis Bisphenol-A mit relativer Lösungsviskosität (gemessen an einer Lösung von 0,5 g des Polycarbonats in 100 ml Methylenchlorid-Lösung bei 25°C) von 1,25.

### Komponente B.1-1

ABS-Pfropfpolymerisat mit Kern-Schale Struktur hergestellt in Emulsionspolymerisation mit 46 Gew.-% einer Hülle aus Styrol-Acrylnitril Copolymer mit einem Verhältnis von Styrol zu Acrylnitril von 77 : 23 Gew.-% auf 54 Gew.-% einer teilchenförmigen Pfropfgrundlage, wobei die Pfropfpartikel, also die partikuläre Kautschukgrundlage mit ihrer chemisch angebundenen Pfropfhülle, eine mittlere Teilchengröße d₅₀ von etwa 150 nm aufweisen, und wobei die Pfropfgrundlage aus reinem Polybutadienkautschuk besteht. 55 Gew.-% der Pfropfpartikel weisen gemessen mittels Ultrazentrifuge einen Durchmesser von kleiner als 200 nm und 15 Gew.-% der Pfropfpartikel weisen gemessen mittels Ultrazentrifuge einen Durchmesser von größer als 400 nm auf.

### Komponente B.2-1

SAN-Polymerisat aus 23 Gew.-% Acrylnitril und 77 Gew.-% Styrol.

### Komponente B-1

Präcompound bestehend aus 50 Gew.-% der Komponente B.1-1 und 50 Gew.-% der Komponente B.2-1.

### Komponente C-1

Pentaerithrithtetrastearat als Entformungsmittel

### Komponente C-2

Phosphorigsäureester des Bis-(2-hydroxy-3-cyclohexyl-5-methyl-phenyl)-methans gemäß der folgenden Formel (V)

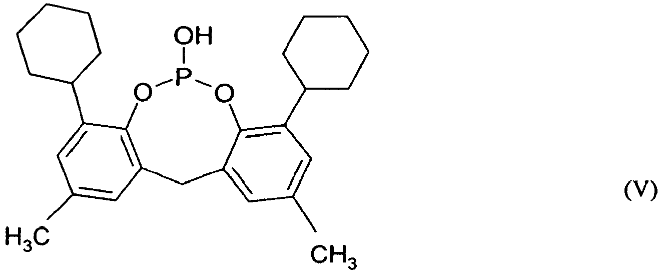

Auf einem Zweiwellenextruder ZSK-25 (Coperion, Werner & Pfleiderer) wurde bei einer Massetemperatur von 260°C die folgende Zusammensetzung compoundiert:

| | |
|---|---|
| A-1 | 65,46 % |
| B-1 | 14,00 % |
| B.2-1 | 19,70 % |
| C-1 | 0,74 % |
| C-2 | 0,10 % |

Die Zusammensetzung weist einen Elastomergehalt von 3,8 Gew.-% auf.

An der Zusammensetzung wurde eine Schmelzeviskosität gemäß ISO 11443 bei einer Temperatur von 260°C und der Scherrate von 1000s⁻¹ von 190 Pas gemessen.

Als Maß für die hohe Wärmeformbeständigkeit wurde ein Vicat B120-Wert gemäß ISO 306 von 126°C ermittelt.

Das Material zeigte im Kerbschlagversuch bei 23°C gemäß ISO 180/1A ein zähes Bruchverhalten. Es wurde ein Kerbschlagzähigkeitswert von 40 kJ/m² ermittelt.

Formkörper mit partiell konkav oder konvex geformter Oberfläche, welche aus dieser erfindungsgemäßen Zusammensetzung im Spritzgussverfahren hergestellt wurden, zeigten nach Metallisierung mittels PVD (Physical Vapor Deposition) in visueller Begutachtung einen hohen Glanzgrad, wobei die Homogenität des Glanzgrades über das Formteil höher war als bei vergleichbaren Formkörpern, welche aus Zusammensetzungen gemäß dem Stand der Technik geformt wurden.

## Patentansprüche

1. Zusammensetzungen enthaltend
A) 55 bis 90 Gew.-Teile (bezogen auf die Summe der Gew.-Teile der Komponenten A, B und C) aromatisches Polycarbonat und/oder aromatisches Polyestercarbonat mit einer relativen Lösungsviskosität, gemessen in Methylenchlorid, von 1,20 bis 1,30,
B) 10 bis 45 Gew.-Teile (bezogen auf die Summe der Gew.-Teile der Komponenten A, B und C) kautschukmodifizierte Komponente enthaltend
B.1) mindestens ein Pfropfpolymerisat, hergestellt in Emulsionspolymerisation, durch Pfropfpolymerisation von
B.1.1) 5 bis 95 Gew.-%, bezogen auf die Summe aus B.1.1 und B.1.2, wenigstens eines Vinylmonomeren auf
B.1.2) 95 bis 5 Gew.-%, bezogen auf die Summe aus B.1.1 und B.1.2, einer oder mehrerer teilchenförmiger Kautschuke als Pfropfgrundlagen mit Glasübergangstemperaturen < 0°C"
B.2) ein kautschukfreies Vinyl(co)polymerisat,
B.3) gegebenenfalls ein Pfropfpolymerisat von wenigstens einem Vinylmonomeren auf wenigstens eine Kautschukgrundlage mit einer Glasübergangstemperatur < 0°C, hergestellt im Masse-, Lösungs- oder Masse-Suspensions-Polymerisationsverfahren, wobei die Pfropfpolymerisate B.1 und B.3 herstellungsbedingt neben Pfropfpartikeln gegebenenfalls auch freies, das heißt chemisch nicht an die Kautschukpartikel gebundenes und/oder in organischen Lösungsmitteln unlöslicher Form in die Pfropfpartikel eingeschlossenes (Co)Polymerisat der Vinylmonomere enthalten können,
C) 0 bis 25 Gew.-Teile (bezogen auf die Summe der Gew.-Teile der Komponenten A, B und C) Polymeradditive,
**dadurch gekennzeichnet, dass**
(i) der Kautschukgehalt der Polycarbonat-Zusammensetzung 1 bis 6 Gew.-% beträgt sowie
(ii) mindestens 40 Gew.-% der Pfropfpartikel in Komponente B einen Durchmesser (gemessen mit Ultrazentrifuge) von bis zu 200 nm aufweisen, und
(iii) dass bis zu 25 Gew.-% der Pfropfpartikel in der Komponente B einen Durchmesser (gemessen mit Ultrazentrifuge) von über 400 nm aufweisen.
wobei die Summe der Komponenten A + B + C auf 100 Gewichtsteile normiert ist.

2. Zusammensetzungen gemäß Anspruch 1 mit einem Kautschukgehalt der Polycarbonat-Zusammensetzung von 2,5 bis 5,0 Gew.-%.

3. Zusammensetzungen gemäß Anspruch 1 oder 2, **dadurch gekennzeichnet, dass** mindestens 50 Gew.-% der Pfropfpartikel in Komponente B einen Durchmesser (gemessen mit Ultrazentrifuge) von bis zu 200 nm aufweisen.

4. Zusammensetzungen gemäß Anspruch 3 in denen Komponente A eine relative Lösungsviskosität, gemessen in Methylenchlorid, von 1,23 bis 1,27 aufweist.

5. Zusammensetzungen gemäß Anspruch 3 enthaltend 63 bis 80 Gew.-Teile (bezogen auf die Summe der Gew.-Teile der Komponenten A, B und C) an Komponente A.

6. Zusammensetzungen gemäß Anspruch 3 enthaltend 65 bis 75 Gew.-Teile (bezogen auf die Summe der Gew.-Teile der Komponenten A, B und C) an Komponente A.

7. Zusammensetzungen gemäß Anspruch 3, wobei Komponente B.1 ein Pfropfpolymerisat ist von
B.1.1) 25 bis 60 Gew.-% (bezogen auf die Summe der Gew.-% aus B.1.1 und B.1.2) einer Mischung aus
B.1.1.1) 50 bis 99 Gew.-% (bezogen auf die Summe der Gew.-% aus B.1.1.1 und B.1.1.2) mindestens eines Monomeren ausgewählt aus der Gruppe bestehend aus Vinylaromaten und/oder kernsubstituierten Vinylaromaten und Methacrylsäure-(C₁-C₈)-Alkylester und
B.1.1.2) 1 bis 50 Gew.-% (bezogen auf die Summe der Gew.-% aus B.1.1.1 und B.1.1.2) mindestens eines Monomeren ausgewählt aus der Gruppe bestehend aus Vinylcyanide, (Meth)Acrylsäure-(C₁-C₈)-Alkylester, ungesättigte Carbonsäuren und/oder Derivate ungesättigter Carbonsäuren auf
B.1.2) 75 bis 40 Gew.-% (bezogen auf die Summe der Gew.-% aus B.1.1 und B.1.2) einer oder mehrerer Pfropfgrundlagen mit Glasübergangstemperaturen < -20°C,.

8. Zusammensetzungen gemäß Anspruch 7, wobei Komponente B.1 ein ABS- oder MBS-Pfropfpolymerisat mit Kern-Schale-Struktur ist.

9. Zusammensetzung gemäß Anspruch 3, die frei ist von Komponente B.3.

10. Zusammensetzung gemäß Anspruch 3 enthaltend als Komponente C) 0,1 bis 5 Gew.-Teile (bezogen auf die Summe der Gew.-Teile der Komponenten A, B und C) mindestens eines Additivs ausgewählt aus der Gruppe bestehend aus interne und externe Gleit- und Entformungsmittel, Fließfähigkeitshilfsmittel, Antistatika, Leitfähigkeitsadditive, Stabilisatoren, antibakteriell wirkende Additive, kratzfestigkeitsverbessernde Additive, IR-Absorbentien, optische Aufheller, fluoreszierende Additive, Farbstoffe und Pigmente und Brönstet-saure Verbindungen.

11. Bauteile hergestellt aus oder enthaltend eine Zusammensetzung gemäß einer der Ansprüche 1 bis 10.

12. Verwendung der Zusammensetzungen gemäß einer der Ansprüche 1 bis 10 zur Herstellung von metallisierten Formkörpern mit einer auf der metallisierten Seite zumindest zum Teil konkav oder konvex gekrümmten Oberfläche.

13. Verwendung der Zusammensetzungen nach Anspruch 12 zur Herstellung von metallisierten Formkörpern, wobei die metallisierten Formkörpern eine auf der metallisierten Seite zumindest zum Teil konkav oder konvex gekrümmte Oberfläche aufweisen, welche eine Schmelzeviskosität gemessen gemäß ISO 1143 bei einer Schmelzetemperatur von 260°C und einer Scherrate von 1000 s⁻¹ von maximal 230 Pas aufweisen.

14. Leuchtengehäuse mit Reflektorfunktionalität enthaltend eine Zusammensetzung gemäß einer der Ansprüche 1 bis 10.

15. Zusammensetzung gemäß Anspruch 1, **dadurch gekennzeichnet**, Komponente A in 63-80 Gew.-Teilen und Komponente B in 15 - 37 Gew.-Teile enthalten ist.

## Claims

1. Compositions comprising
A) 55 to 90 parts by weight (based on the sum of the parts by weight of components A, B and C) of aromatic polycarbonate and/or aromatic polyester carbonate with a relative solution viscosity, measured in methylene chloride, of 1.20 to 1.30,
B) 10 to 45 parts by weight (based on the sum of the parts by weight of components A, B and C) of rubber-modified component comprising
B.1) at least one graft polymer, produced by emulsion polymerisation, by graft polymerisation of
B.1.1) 5 to 95 wt.%, based on the sum of B.1.1 and B.1.2, of at least one vinyl monomer on
B.1.2) 95 to 5 wt.%, based on the sum of B.1.1 and B.1.2, of one or more particulate rubbers as backbones with glass transition temperatures of < 0°C,
B.2) a rubber-free vinyl (co)polymer,
B.3) optionally a graft polymer of at least one vinyl monomer on at least one rubber backbone with a glass transition temperature of < 0°C, produced by a bulk, solution or bulk-suspension polymerisation process,
wherein the graft polymers B.1 and B.3, in addition to graft particles, may optionally also comprise as a result of their production free (co)polymer of the vinyl monomers, i.e. not chemically bonded to the rubber particles and/or included in the graft particles in a form that is insoluble in organic solvents,
C) 0 to 25 parts by weight (based on the sum of the parts by weight of components A, B and C) of polymer additives,
**characterized in that**
(i) the rubber content of the polycarbonate composition is 1 to 6 wt.%, and
(ii) at least 40 wt.% of the graft particles in component B have a diameter (measured by ultracentrifuge) of up to 200 nm, and
(iii) **in that** up to 25 wt.% of the graft particles in component B have a diameter (measured by ultracentrifuge) of over 400 nm,
wherein the entirety of components A + B + C is standardised to 100 parts by weight.

2. Compositions according to claim 1 with a rubber content of the polycarbonate composition of 2.5 to 5.0 wt.%.

3. Compositions according to claim 1 or 2, **characterized in that** at least 50 wt.% of the graft particles in component B have a diameter (measured by ultracentrifuge) of up to 200 nm.

4. Compositions according to claim 3 in which component A has a relative solution viscosity, measured in methylene chloride, of 1.23 to 1.27.

5. Compositions according to claim 3 comprising 63 to 80 parts by weight (based on the sum of the parts by weight of components A, B and C) of component A.

6. Compositions according to claim 3 comprising 65 to 75 parts by weight (based on the sum of the parts by weight of components A, B and C) of component A.

7. Compositions according to claim 3, wherein component B.1 is a graft polymer of
B1.1) 25 to 60 wt.% (based on the sum of the wt.% of B.1.1 and B.1.2) of a mixture of
B.1.1.1) 50 to 99 wt.% (based on the sum of the wt.% of B.1.1.1 and B.1.1.2) of at least one monomer selected from the group consisting of vinyl aromatics and/or ring-substituted vinyl aromatics and methacrylic acid (C₁-C₈) alkyl esters and
B.1.1.2) 1 to 50 wt.% (based on the sum of the wt.% of B.1.1.1 and B.1.1.2) of at least one monomer selected from the group consisting of vinyl cyanides, (meth)acrylic acid (C₁-C₈) alkyl esters, unsaturated carboxylic acids and/or derivatives of unsaturated carboxylic acids
on
B.12) 75 to 40 wt.% (based on the sum of the wt.% of B.1.1 and B.1.2) of one or more backbones with glass transition temperatures of < -20°C.

8. Compositions according to claim 7, wherein component B.1 is an ABS or MBS graft polymer with a core-shell structure.

9. Composition according to claim 3, which is free from component B.3.

10. Composition according to claim 3 comprising as component C) 0.1 to 5 parts by weight (based on the sum of the parts by weight of components A, B and C) of at least one additive selected from the group consisting of internal and external lubricants and mould release agents, flow auxiliaries, antistatic agents, conductivity additives, stabilisers, antibacterial additives, scratch resistance improving additives, IR absorbers, optical brighteners, fluorescent additives, dyes and pigments and Brönsted acid compounds.

11. Components produced from or comprising a composition according to one of claims 1 to 10.

12. Use of the compositions according to one of claims 1 to 10 for the production of metallised mouldings with a surface which is at least partly curved concavely or convexly on the metallised side.

13. Use of the compositions according to claim 12 for the production of metallised mouldings, wherein the metallised mouldings have a surface which is at least partly curved concavely or convexly on the metallised side, with melt viscosity of no more than 230 Pas, measured in accordance with ISO 1143 at a melt temperature of 260°C and a shear rate of 1000 s⁻¹.

14. Lamp housings with a reflector functionality comprising a composition according to one of claims 1 to 10.

15. Composition according to claim 1, **characterized in that** the quantity of component A present is 63-80 parts by weight and the quantity of component B present is 15-37 parts by weight.

## Revendications

1. Compositions contenant
A) 55 à 90 parties en poids (par rapport à la somme des parties en poids des composants A, B et C) de polycarbonate aromatique et/ou de polyestercarbonate aromatique présentant une viscosité relative en solution, mesurée dans le chlorure de méthylène, de 1,20 à 1,30,
B) 10 à 45 parties en poids (par rapport à la somme des parties en poids des composants A, B et C) de composant modifié par du caoutchouc contenant
B.1) au moins un polymère greffé, préparé dans une polymérisation en émulsion par une polymérisation de greffage de
B.1.1) 5 à 95% en poids, par rapport à la somme de B.1.1 et de B.1.2, d'au moins un monomère de vinyle sur
B.1.2) 95 à 5% en poids, par rapport à la somme de
B.1.1 et de B.1.2, d'un ou de plusieurs caoutchoucs sous forme de particules comme bases de greffage, présentant des températures de transition vitreuse < 0°C,
B.2) un (co)polymère de vinyle exempt de caoutchouc,
B.3) le cas échéant un polymère greffé d'au moins un monomère de vinyle sur au moins une base de caoutchouc présentant une température de transition vitreuse < 0°C, préparé dans un procédé de polymérisation en masse, en solution ou en masse-suspension, les polymères greffés B.1 et B.3 pouvant contenir, suite à la préparation, outre les particules greffées, le cas échéant également du (co)polymère des monomères de vinyle libre, c'est-à-dire non lié chimiquement aux particules de caoutchouc et/ou inclus dans les particules greffées sous forme insoluble dans les solvants organiques,
C) 0 à 25 parties en poids (par rapport à la somme des parties en poids des composants A, B et C) d'additifs polymères,
**caractérisé en ce que**
(i) la teneur en caoutchouc de la composition de polycarbonate est de 1 à 6% en poids ainsi que
(ii) au moins 40% en poids des particules greffées dans le composant B présentent un diamètre (mesuré à l'aide d'une ultracentrifugeuse) allant jusqu'à 200 nm et
(iii)**en ce que** jusqu'à 25% en poids des particules greffées dans le composant B présentent un diamètre (mesuré à l'aide d'une ultracentrifugeuse) supérieur à 400 nm,
la somme des composants A + B + C étant normalisée à 100 parties en poids.

2. Compositions selon la revendication 1 présentant une teneur en caoutchouc de la composition de polycarbonate de 2,5 à 5,0% en poids.

3. Compositions selon la revendication 1 ou 2, **caractérisées en ce qu'**au moins 50% en poids des particules greffées dans le composant B présentent un diamètre (mesuré à l'aide d'une ultracentrifugeuse) allant jusqu'à 200 nm.

4. Compositions selon la revendication 3, dans lesquelles le composant A présente une viscosité relative en solution, mesurée dans le chlorure de méthylène, de 1,23 à 1,27.

5. Compositions selon la revendication 3, contenant 63 à 80 parties en poids (par rapport à la somme des parties en poids des composants A, B et C) de composant A.

6. Compositions selon la revendication 3, contenant 65 à 75 parties en poids (par rapport à la somme des parties en poids des composants A, B et C) de composant A.

7. Compositions selon la revendication 3, le composant B.1 étant un polymère greffé de
B.1.1) 25 à 60% en poids (par rapport à la somme des % en poids de B.1.1 et B.1.2) d'un mélange de
B.1.1.1) 50 à 99% en poids (par rapport à la somme des % en poids de B.1.1.1 et de B.1.1.2) d'au moins un monomère choisi dans le groupe constitué par les aromatiques de vinyle et/ou les aromatiques de vinyle à noyau substitué et les esters (C₁-C₈)-alkyliques de l'acide méthacrylique et
B.1.1.2) 1 à 50% en poids (par rapport à la somme des % en poids de B.1.1.1 et de B.1.1.2) d'au moins un monomère choisi dans le groupe constitué par les cyanures de vinyle, les esters (C₁-C₈)-alkyliques de l'acide (méth)acrylique, les acides carboxyliques insaturés et/ou les dérivés d'acides carboxyliques insaturés sur
B.1.2) 75 à 40% en poids (par rapport à la somme des % en poids de B.1.1 et de B.1.2) d'une ou de plusieurs bases de greffage présentant des températures de transition vitreuse < -20°C.

8. Compositions selon la revendication 7, le composant B.1 étant un polymère greffé d'ABS ou de MBS présentant une structure à noyau-coquille.

9. Composition selon la revendication 3, qui est exempte du composant B.3.

10. Composition selon la revendication 3, contenant, comme composant C), 0,1 à 5 parties en poids (par rapport à la somme des parties en poids des composants A, B et C) d'au moins un additif choisi dans le groupe constitué par les lubrifiants et agents de démoulage internes et externes, les adjuvants d'aptitude à l'écoulement, les antistatiques, les additifs de conductibilité, les stabilisants, les additifs à effet antibactérien, les additifs améliorant la résistance aux rayures, les absorbants d'IR, les azurants optiques, les additifs fluorescents, les colorants et les pigments et les composés acides de Brönstedt.

11. Pièces préparées à partir d'une ou contenant une composition selon l'une quelconque des revendications 1 à 10.

12. Utilisation des compositions selon l'une quelconque des revendications 1 à 10 pour la production de corps moulés métallisés présentant une surface, sur le côté métallisé, au moins partiellement courbée de manière concave ou convexe.

13. Utilisation des compositions selon la revendication 12 pour la production de corps moulés métallisés, les corps moulés métallisés présentant une surface, sur le côté métallisé, au moins partiellement courbée de manière concave ou convexe, qui présente une viscosité en masse fondue, mesurée selon la norme ISO 1143 à une température de la masse fondue de 260°C et à une vitesse de cisaillement de 1000 s⁻¹, d'au maximum 230 Pa.s.

14. Boîtier de luminaire présentant une fonctionnalité de réflecteur, contenant une composition selon l'une quelconque des revendications 1 à 10.

15. Composition selon la revendication 1, **caractérisée en ce que** le composant A est contenu à raison de 63-80 parties en poids et le composant B à raison de 15-37 parties en poids.
